# EUROPEAN PATENT APPLICATION

(11) **EP 0 678 738 A1**
(43) Date of publication of application: **25.10.1995**
(21) Application number: 95500054.2
(22) Date of filing: 21.04.1995
(51) Int. Cl.: G01G 19/393

(54) **Distribution table structure of combination weighing system**

(30) Priority: 22.04.1994 ES 9400849
(71) Applicant: Paniagua Olaechea, Rosalina, E-46600 Alzira (Valencia) (ES)
(72) Inventor: Paniagua Olaechea, Rosalina, E-46600 Alzira (Valencia) (ES)
(74) Representative: Duran Moya, Carlos

(57) **Abstract**

The machine comprises a fruit-receiving hopper consisting of a central body and a peripheral wing, separated by an intermediate gap, and the central part being rotated by a geared motor unit, whilst the frustoconical peripheral part can likewise be rotatable or fixed. A plurality of adjacent laminar flaps, of which the tilting is controlled owing to their connection to an upper fixed circular guide or by means of independent cylinder-piston units, allows the pieces of fruit to pass to the weighing cells and thence to the receiving trays.

## Description

The present invention relates to multi-balance machines for weighing fruit which offer substantial features of novelty and inventive activity with respect to the prior art.

The object of a multi-balance machine for weighing fruit is to provide conveniently weighed batches of fruit in a sequence predetermined by a central electronic control unit of the machine in order to obtain specific final weights, on the basis of the exact unitary weights of the various trays or containers which contain the fruit and which have been weighed automatically by means of the corresponding load cell devices.

The currently known machines of this type are problematic owing to the transmission of the marked vibrations and knocks to the load cells, as a result of which the readings of these cells are highly inaccurate. This is generally due to the construction of the machine as a whole and in particular to the use of vibrating means in order to move the pieces of fruit from the central part of the feed tub to the peripheral area thereof from which the individual trays and containers are filled.

A machine to which the present invention relates provides the means necessary for avoiding the above disadvantages, offering a mode of functioning which is very smooth and eliminates the majority of the vibrations generated whilst the machine is operating, as well as complete insulation of the residual vibrations generated with respect to the load cells.

The machine in question essentially comprises a circular tub having a conical base which is rotated by a central system, the conical body of the tub consisting of a central part which contains the apex and a frustoconical peripheral part separated from the first part, both parts rotating in the same sense of rotation but the speed of the peripheral part, which comprises flaps for the passage of the pieces of fruit for filling the individual weighing trays or containers, being slower.

In this machine the individual flaps enabling the fruit to be discharged from the hopper are actuated by the combination of an upper ring integral with the frustoconical peripheral part of the hopper, above which the arms for actuating each of the individual flaps are articulated, which are further connected at their upper ends in a guide having profiled sections with cams disposed in a circular rim which is concentric with the hopper and secured to the machine frame.

The individual weighing trays or containers are separated from the assembly of the loading hopper and its drive components, exerting their weight by resting directly on the load cells which are mounted on a support plate secured to the machine frame by means of a vibration-damping layer.

The above machine likewise comprises individual devices for actuating the mechanisms for opening the tilting bases of the individual weighing trays, which actuating devices preferably consist of pneumatic cylinder-piston actuating units which are incorporated in the lower support plate accommodating the above-mentioned vibration-damping layer, as well as the crown bearing the weighing cells, without the actuating devices contacting said intermediate vibration-damping device or the crown bearing the weighing cells.

In a further variant of the present invention, the central hopper consists of the movable cone and a fixed frustoconical crown, transferring the pieces of fruit to the area delimited by the frustoconical crown which contains a plurality of tilting flaps actuated by individual cylinder-piston units which load the fruit onto the weighing trays. The central conical part of the hopper may have its apex oriented towards the upper flat part or it may be inverted, i.e. the apex may be located at the bottom, being joined in all cases with the frustoconical crown of which the conicity is such that the inclination is oriented externally, in order to guide the pieces of fruit.

For better comprehension, drawings illustrating preferred embodiments of multi-balance machines for weighing fruit, to which the present invention relates, are appended by way of example. In the drawings:
- Figure 1: shows diagrammatically a complete section in a diametrical plane of a machine produced in accordance with the present invention;
- Figure 2: shows a plan view corresponding to the machine shown in Figure 1;
- Figure 3: shows a detail in section of the units for actuating the movable base of the hopper;
- Figure 4: shows a diagrammatic plan view of the arrangement for actuating the rotary hopper from a central axis;
- Figure 5: shows a detail in section of the actuation of the lateral hatches of the loading hopper;
- Figure 6: is an elevation view showing a detail of the construction of the flaps in the loading hopper of Figure 5;
- Figure 7: shows in developed manner a detail of the fixed crown for actuating the flaps in the fruit hopper of Figures 5 and 6;
- Figure 8: shows a diagrammatic section of the means for actuating the tilting bases of the weighing trays;
- Figure 9: shows a simplified cross-section of a variant in which the hopper has a fixed external frustoconical area and the flaps for controlling the passage of the pieces of fruit are actuated by a cylinder-piston system;
- Figures 10 and 11: are both views in simplified cross-section, similar to Figure 9, corresponding to the cases in which the central part of the hopper is flat or conical in the opposite direction, respectively;
- Figure 12: shows a detail in plan view of the machine shown in Figures 9 to 11; and

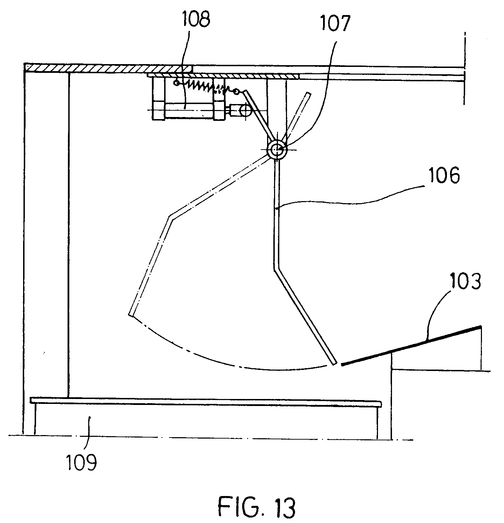

- Figure 13: is a detail in section in the sectional plane indicated.

As shown in the Figures, a machine to which the present invention relates comprises, in known manner, a conical central hopper 1 for receiving the pieces of fruit which have to be fed at the periphery, as shown by the arrows 2, to the weighing trays or containers 3 which act on the load cells 4. The selective emptying of the trays or containers 3 is controlled by a central control system of the machine provided with a microprocessor, by selecting the suitable trays 3 in order that, taking account of its exact weight, a total weight of the load deposited in the lower collection hopper 5 is obtained according to the predetermined values which were previously transmitted to the central control unit. The lower hopper 5 comprises a lower system of emptying hatches 6, the pieces of fruit reaching this lower area via the paths 7.

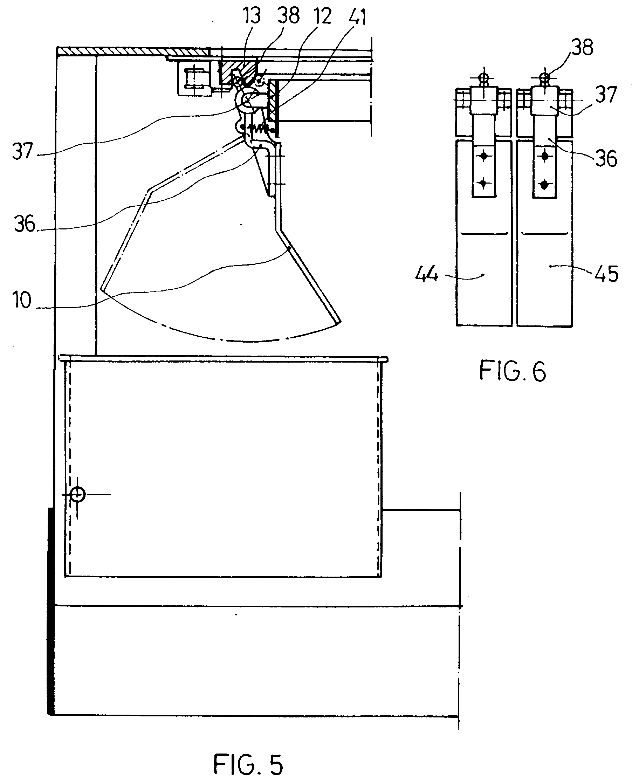

A machine according to the present invention, of the general type indicated, is characterized in that it comprises the principal conical hopper 1 divided into two areas, i.e. the upper cone 8, which comprises the apex of the cone, and a frustoconical peripheral crown 9 separated from the part 8 by the gap or break in continuity 11. Rotation is brought about such that both the cone 8 and the frustoconical crown 9 rotate in the same sense but at different speeds, the speed of the crown 9 being the slower, which enables the entire lower part of the hopper to be filled in a smoother and more regular manner, the hopper being delimited at the periphery by a plurality of flaps 10 which can move in a tilting manner and adopt the structure of individual bands or blades, as shown by Figure 6 which shows two of these components, designated 44 and 45. Said blades or bands 10 are articulated at the top at transverse shafts coupled to a movable crown 12 which permits interaction between the articulated actuation ends in a fixed upper crown 13 comprising a plurality of channels which determine cam profile sections which, combined with a cylinder-piston actuation device - which will be described below in further detail - control the opening of the flaps or blades 10 for filling the trays 3 once the latter have been selectively emptied.

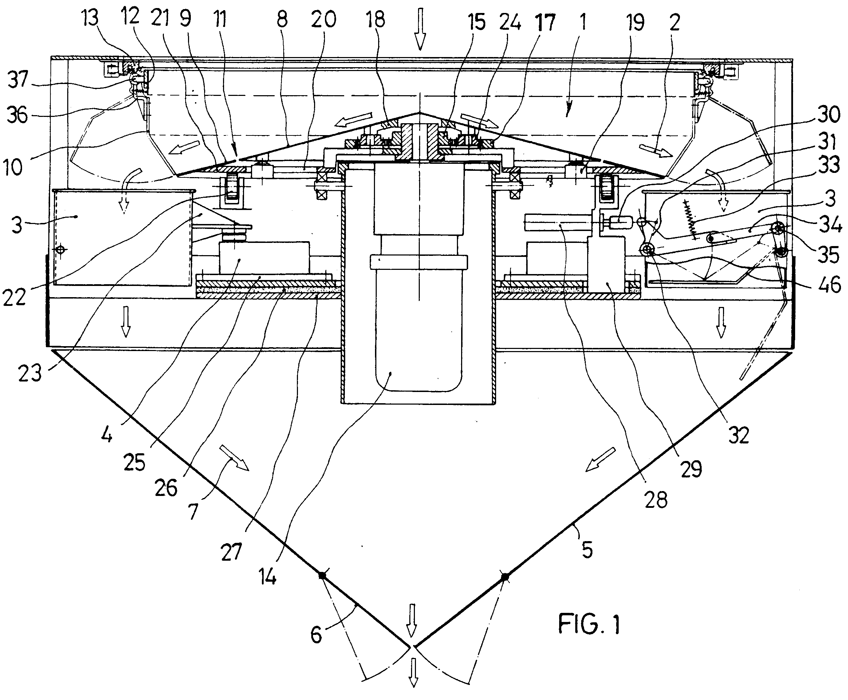

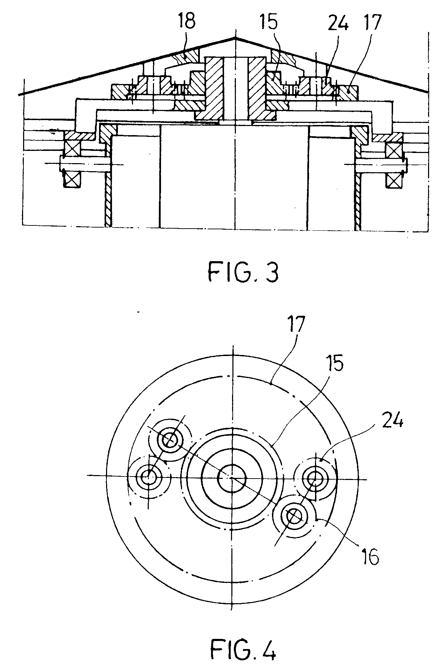

The components 8 and 9 are rotated by means of a central motor 14 and a planet gear transmission system as shown in Figures 1, 3 and 4, which show the central actuating pinion 15, the satellites 16 and 24, which may vary in number, and the external planet crown 17, the central conical component 8 and the outer frustoconical crown 9 thus being driven in the senses of rotation and at the different speeds indicated.

As shown in the Figures, the central cone 8 is actuated by the satellites of which the shafts are incorporated in a support 18 secured at the bottom in an area close to the apex of this cone, which is supported at its periphery on fixed supports 19 by means of balls, rollers or similar systems, in order to prevent flexion of said cone at its outer edge.

The crown 9 is driven via the toothed or planetary crown wheel 17 which is incorporated in a lower frame 20 provided peripherally with the ring 21 secured at the base of the part 9 and supported on the rollers 22.

The weighing trays 3 exert their weight by means of projecting arms 23 resting on the load cells 4.

In order to insulate the load cells 4 in the best possible way with respect to the other units of the machine which are subject to given vibrations and knocks, in the machine to which the present invention relates said load cells 4 are arranged on a plate 25 which, by means of a vibration-damping sheet 26, rests on a lower plate 27 secured to the machine frame.

This arrangement results in the maximum possible insulation of the load cells 4 of which the weighing values are not disturbed by the vibrations or knocking of any parts of the machine. The trays 3 are selectively emptied by means of an arrangement of tilting bases 46 and an articulated system for actuating the latter by means of cylinder-piston units 28 which are incorporated via the supports 29 directly on the fixed lower plate 27, without contacting the intermediate, vibration-damping sheet 26 or the plate 25. The actuating cylinders 28, which are in particular pneumatic, act at their ends 30 on a support arm 31 which pivots on an intermediate shaft 32 and is acted upon by the counter-spring 33, articulated by its longer arm at a second tilting support arm 34 pivoting on the shaft 35 and connected by its shorter arm to the movable base 46 of the tray 3.

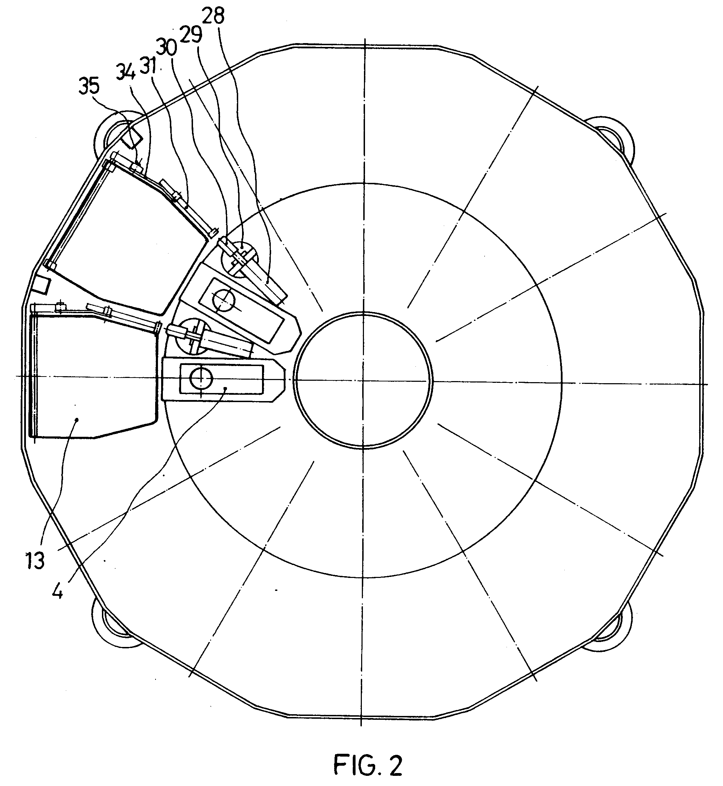

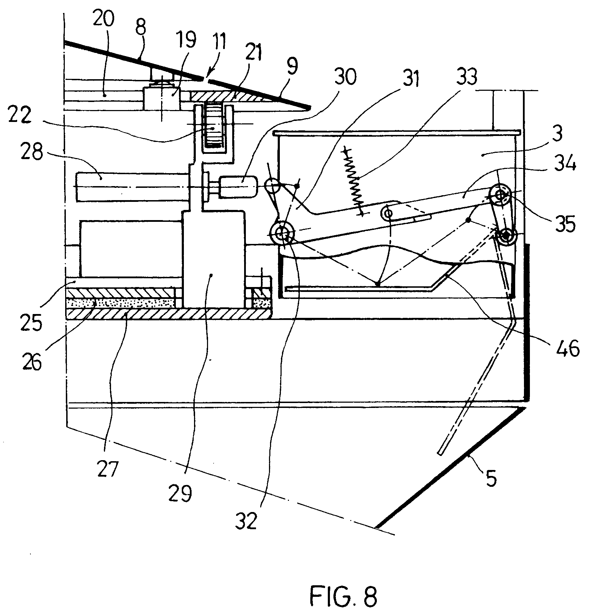

Rapid opening of the base of the tray is thus brought about in order to empty the latter, as is efficient, automatic closure by the action of the counter-spring 33. The arrangement of the means described is also shown in Figures 2 and 8.

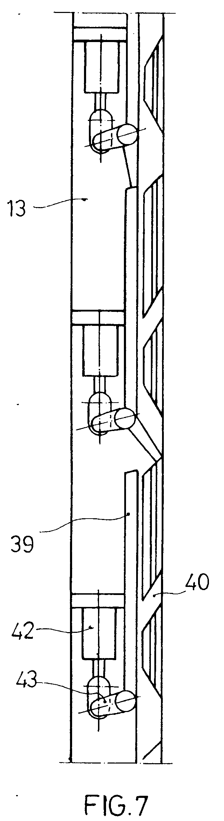

As explained above, the flaps 10 or blades controlling the feeding or loading of the trays 3 are actuated by the interrelation between the upper ends of the flaps 10 and the upper guide 13, as is shown in greater detail in Figures 5, 6 and 7. As these Figures show, the flaps 10 consist of relatively narrow flat blades or bands, which are separated by small gaps and assume an angular structure matching the peripheral shape of the hopper. By means of the upper arms 36 pivoting on intermediate shafts 37 and by means of the upper appendages 38, the above flaps or blades 10 interact with the upper guide 13, which has a plurality of channels or grooves such as 39 and 40 which, by interacting with a counter-spring 41 and the cylinder-piston units 42 which advantageously have movable ends 43, enable the position of the upper appendages 38 of each of the blades to be controlled, the latter thus being opened or closed in accordance with the command which the pneumatic cylinders or the like receive from the control unit Z.

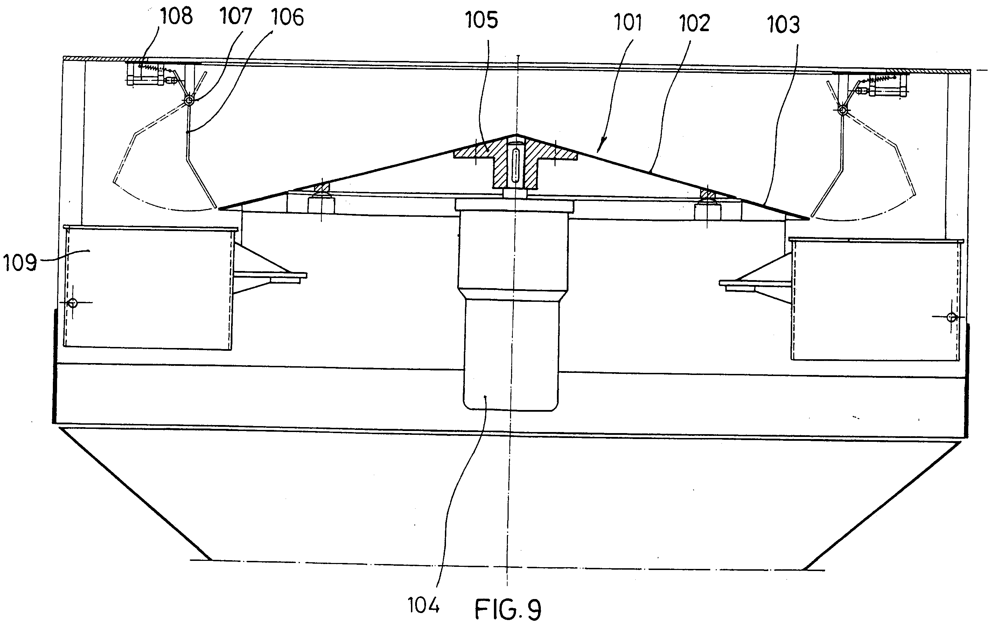

In the variant shown in Figure 9, the central hopper 101 comprises the conical part 102 and the peripheral frustoconical crown 103 which is fixed. The conical part 102 is centrally actuated by a motor and reduction gear assembly 104 by means of a coupling cone 105. In this variant, the pieces of fruit sliding on the surface of the cone 102 and of the frustoconical surface 103 are retained by the flaps 106 tilting about transverse axes 107 and pivoted by the preferably pneumatic cylinder-piston units 108. The lifting of the flaps 106 allows the pieces of fruit to pass towards the weighing trays 109.

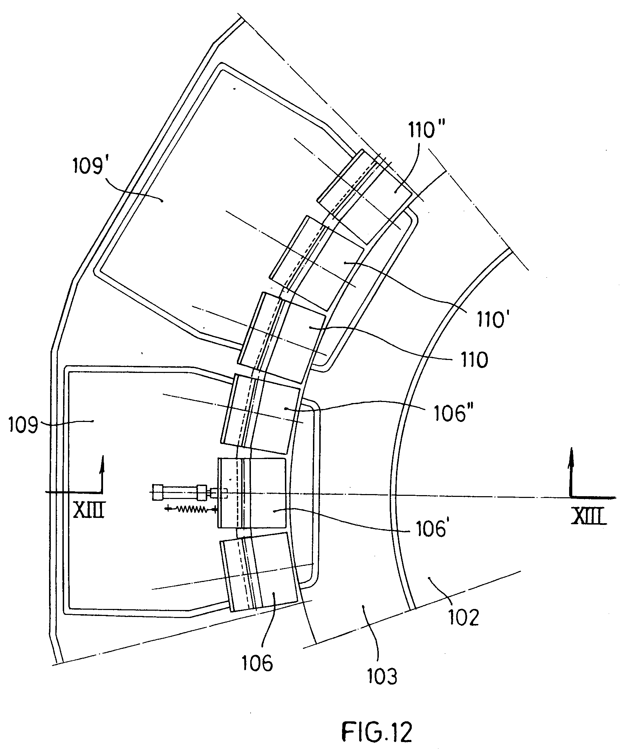

Figure 12 shows a plan view in which two successive weighing trays 109 and 109' can be seen with the assembly of flaps 106, 106' and 106" for the tray 109 and the flaps designated by the reference numerals 110, 110' and 110" for the weighing tray 109'.

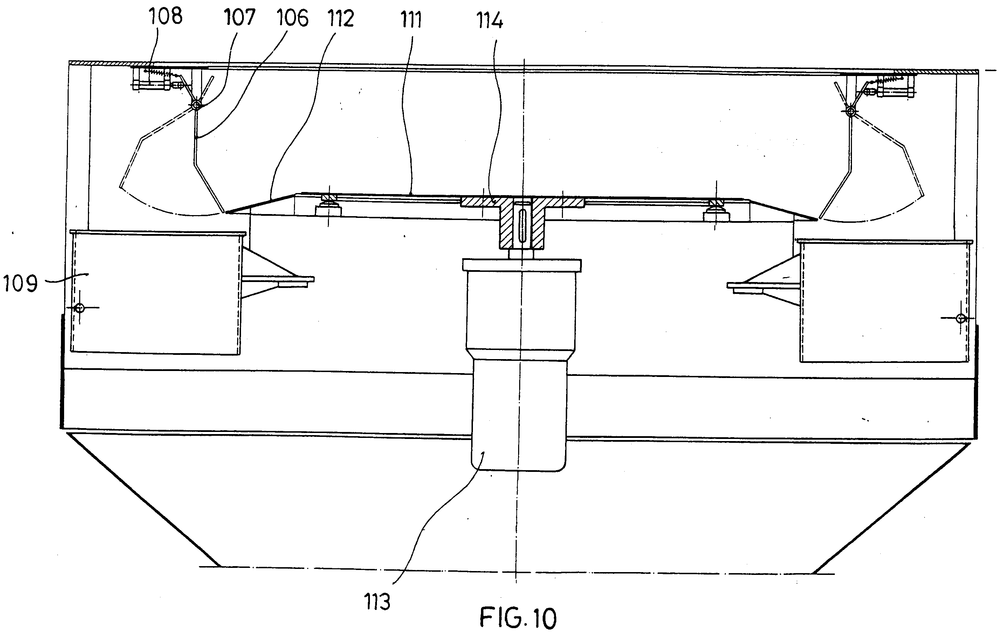

In Figure 10, the central fruit-receiving component, which replaces the hopper in the other variants, consists of a plate 111 having a flat structure and associated at its periphery with a frustoconical body 112 of a type similar to the frustoconical parts of the other variants shown. The flaps are arranged and operate in the same way in this case also, for which reason they are not numbered or described in detail. Actuation is brought about by a geared motor 113 by means of the coupling plate 114.

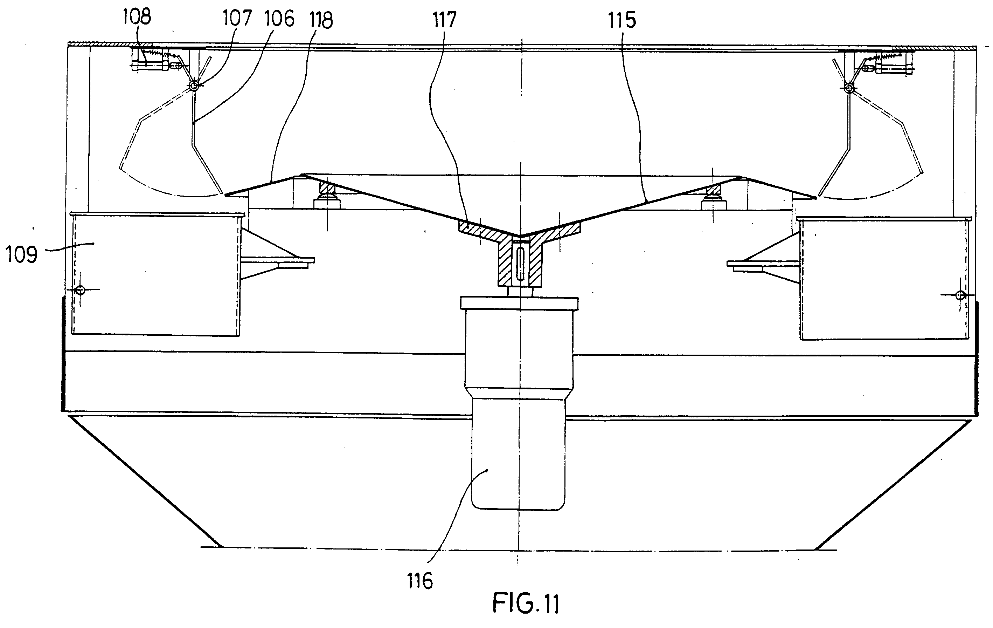

In the case illustrated in Figure 11 the central hopper consists of a conical central body 115 with inverted conicity, i.e. with the apex at the bottom, as shown in the Figure, with actuation brought about by a geared motor 116 by means of the conical coupling plate 117. The features of the peripheral frustoconical part 118 are similar to those of the other variants explained above.

As will be appreciated, the actuating units shown as pneumatic cylinders can be replaced by units which are electromagnetic, hydraulic, etc.

## Claims

1. Multi-balance machine for weighing fruit, of the type comprising a hopper for receiving fruit and having a generally conical structure with peripheral flaps for feeding fruit into the weighing trays located at the bottom, at the periphery of the machine, which provide selective batches of fruit to a lower collecting hopper, characterized in that the receiving hopper comprises a central conical body and a peripheral wing, corresponding to the same conical surface and separated by an intermediate gap, being rotated in the same sense of rotation and at different speeds, the outer wall of the frustoconical hopper comprising a plurality of laminar flaps which are disposed in succession and adjacent one another and the tilting of which is controlled as a result of their being associated with a fixed upper circular guide provided with guide channels and movable ends controlled by devices commanded from the central electronic control system of the machine, which comprises weighing cells individually intended for each of the trays mounted in an insulated manner relative to the movable units of the machine, with vibration-damping devices.

2. Multi-balance machine for weighing fruit according to Claim 1, characterized by the arrangement of a system for driving the two component parts of the frustoconical base of the hopper by the central motor which, by means of a drive crown wheel and an assembly of satellites and a planet crown wheel, independently actuates the part corresponding to the cone and the part corresponding to the frustoconical peripheral crown at different speeds.

3. Multi-balance machine for weighing fruit according to Claim 1, characterized in that the peripheral frustoconical crown of the machine hopper is driven at a lower speed than the central part of the actual conical structure of the hopper.

4. Multi-balance machine for weighing fruit according to Claim 1, characterized by the arrangement of the load cells on an annular plate which rests on a plate of the fixed frame of the machine by means of vibration-damping plates, which load cells are acted upon by the arms transmitting the weight of the trays directly as a result of the arms resting on the corresponding load cells.

5. Multi-balance machine for weighing fruit according to Claim 1, characterized in that the laminar flaps which close the hopper at its periphery are pivotable about transverse axes of a rotating ring connected to the outer frustoconical part of the hopper and have at the top extensions which pass through grooves in a concentric ring secured to the machine frame, which grooves, associated with movable ends controlled by the central control unit of the machine and combined with counter-springs, determine the raising and lowering movements of the flaps for stopping and starting the supply of fruit to the weighing trays.

6. Multi-balance machine for weighing fruit according to Claim 1, characterized in that the tilting bases of the fruit-weighing trays are actuated by means of a system of articulated arms and counter-springs by actuators preferably consisting of pneumatic cylinders coupled to the fixed support plate which accommodates the vibration-damping layer carrying the weighing cells, without contacting said damping layer or plate.

7. Multi-balance machine for weighing fruit according to Claim 6, characterized in that the assembly of articulated arms for actuating the base of each fruit-weighing tray comprises two support arms which are articulated relative to one another by one of the arms and can pivot on the tray body, one of the arms being acted upon via said arm by the actuating device and the second arm being articulated via its second arm with the tilting tray base, which controls its tilting movements.

8. Multi-balance machine for weighing fruit according to Claim 1, characterized in that the peripheral frustoconical part of the central hopper is fixed.

9. Multi-balance machine for weighing fruit according to Claim 8, characterized in that the tilting flaps are actuated individually by cylinder-piston units.

10. Multi-balance machine for weighing fruit according to Claim 8, characterized in that the central part of the fruit-receiving hopper consists of a flat plate which is surrounded peripherally by the fixed frustoconical part for the output of the pieces of fruit.

11. Multi-balance machine for weighing fruit according to Claim 8, characterized in that the central part of the fruit-receiving hopper consists of a conical body with inverted conicity, with the apex disposed at the bottom, and connected at its periphery to the fixed frustoconical part.
